(19) Europäisches Patentamt
European Patent Office
Office européen des brevets

(11) **EP 3 989 356 B1**

(12) **EUROPEAN PATENT SPECIFICATION**

(45) Date of publication and mention
of the grant of the patent:
**06.03.2024 Bulletin 2024/10**

(21) Application number: **21151163.9**

(22) Date of filing: **12.01.2021**

(51) International Patent Classification (IPC):
***H01M 50/583*** (2021.01)

(52) Cooperative Patent Classification (CPC):
**H01M 50/583; H01M 50/547; H01M 50/593;**
Y02E 60/10

(54) **BATTERY, BATTERY MODULE AND BATTERY PACK**

BATTERIE, BATTERIEMODUL UND BATTERIESATZ

BATTERIE, MODULE DE BATTERIE ET BLOC-BATTERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2020 CN 202022373057 U**

(43) Date of publication of application:
**27.04.2022 Bulletin 2022/17**

(73) Proprietors:
• **CALB Co., Ltd.**
**Changzhou City, Jiangsu Province (CN)**
• **CALB Technology Co., Ltd.**
**Changzhou City, Jiangsu Province (CN)**

(72) Inventors:
• **Chang, Lihui**
**Luoyang City,, Henan Province (CN)**
• **Bai, Hongyan**
**Luoyang City,, Henan Province (CN)**
• **Li, Xinjian**
**Changzhou City,, Jiangsu Province (CN)**
• **Du, Xiaoyuan**
**Luoyang City,, Henan Province (CN)**
• **Qi, Binwei**
**Luoyang City,, Henan Province (CN)**
• **Xu, Jiuling**
**Changzhou City,, Jiangsu Province (CN)**

(74) Representative: **Becker, Eberhard**
**Becker Kurig & Partner
Patentanwälte mbB
Bavariastraße 7
80336 München (DE)**

(56) References cited:
EP-A1- 2 495 785     EP-A1- 2 551 938
EP-A1- 3 477 743     EP-A2- 2 793 295
CN-B- 108 123 179     CN-U- 201 994 346
US-A1- 2012 094 172     US-A1- 2017 250 394

EP 3 989 356 B1

## Description

BACKGROUND

Field of the Disclosure

The disclosure relates to the technical field of batteries, and especially to a battery, a battery module and a battery pack.

Description of Related Art

A rechargeable device is usually provided with rechargeable battery/batteries, such as lithium battery. To ensure the safety of the rechargeable device, on the one hand, it must be ensured that the battery is safe, for example, to avoid accidental explosions or fires caused by the battery.

Based on the above, how to design the battery and improve the safety of the battery is a technical problem to be solved urgently by those skilled in the art.

US 2017/250394 A1 discloses a secondary battery, which includes an electrode body including a positive-electrode sheet and a negative-electrode sheet, an exterior body having an opening and accommodating the electrode body, a sealing body sealing the opening, a terminal electrically connected to the positive-electrode sheet and extending through a through-hole formed in the sealing body, and a conductive member connected to the terminal outside the sealing body. The conductive member includes a fuse. The fuse is covered by a cover. An insulating member is disposed between the conductive member including the fuse and the sealing body.

EP 2 793 295 A2 discloses a rechargeable battery having an electrode assembly including a first electrode, and a second electrode, a case receiving the electrode assembly, a cap plate coupled with the case, a first electrode terminal electrically connected with the first electrode, and a cap connection member connecting the first electrode terminal and the cap plate and having a connection fuse portion formed therein.

EP 2 495 785 A1 discloses a secondary battery and a battery pack including the second battery, which includes a battery case having a polarity in a normal operation. The battery case is neutralized in an abnormal operation. The secondary battery includes an electrode assembly, a battery case accommodating the electrode assembly, electrode terminals electrically connected to the electrode assembly and extending out of the battery case, and a fuse part disposed between the battery case and the electrode terminal to electrically connect the battery case to the electrode terminal. The fuse part is configured to selectively electrically disconnect the battery case from the electrode terminal.

EP 2 551 938 A1 discloses a rechargeable battery, which includes an electrode assembly having a positive electrode and a negative electrode, a case receiving the electrode assembly, a cap plate coupled with the case, first and second terminals electrically connected to the electrodes, and a connecting member electrically connecting the first terminal to the cap plate. The connecting member may have an elastically deformable structure.

CN 108 123 179 B discloses an electric automobile power battery, which comprises a shell, an upper cover plate, a lower cover plate and a battery cell. Two ends of the shell are respectively and fixedly connected with the upper cover plate and the lower cover plate in a sealing way. The upper cover plate is provided with a positive electrode conductive terminal insulated from the upper cover plate, and the lower cover plate is provided with a negative electrode conductive terminal insulated from the lower cover plate. The shell is filled with electrolyte, the battery cell is soaked in the electrolyte, the battery cell comprises a first insulating diaphragm, a second insulating diaphragm, a third insulating diaphragm and a winding sheet. The first insulating diaphragm, the second insulating diaphragm and the third insulating diaphragm are sequentially laminated and are wound into a whole through the winding sheet. A plurality of transversely arranged positive electrode sheets are arranged between the second insulating diaphragm and the first insulating diaphragm, and a plurality of transversely arranged negative electrode sheets are arranged between the second insulating diaphragm and the third insulating diaphragm. The negative electrode sheets are arranged opposite to the positive electrode sheets, and the positive electrode conductive terminals are electrically connected with the positive plate, and the negative conductive terminal is electrically connected with the negative plate.

EP 3 477 743 A1 discloses a rechargeable battery, which includes an electrode assembly, a case where the electrode assembly is embedded, a cap plate, a first electrode terminal, and a second electrode terminal. The electrode assembly includes a first electrode, a second electrode, and a separator that is disposed between the first electrode and the second electrode. The cap plate is coupled to an opening of the case. The first electrode terminal is provided on an upper side of the cap plate and has a first plate terminal that is electrically connected with the cap plate through a fuse portion. The second electrode terminal is provided on the upper side of the cap plate and that is electrically connected with the second electrode by penetrating through the cap plate.

CN 201 994 346 U discloses a power battery metal housing, which includes a metal housing, a top cover sheet, an anode pole and a cathode pole respectively in insulated connection with the top cover sheet, and a fuse. One end of the fuse is connected with the top cover sheet of the battery. The top cover sheet is made of metallic material. The other end of the fuse is connected with the anode pole or the cathode pole.

US 2012/094172 A1 discloses a battery including a housing made by a metal or a metal alloy, a battery core in the housing, an electrolyte in the housing, a cover assembly, and a protection component. The battery core comprises a positive plate, a separator and a negative plate. The cover assembly has a positive terminal electrically connected with the positive plate and a negative terminal electrically connected with the negative plate. The protection component is disposed to prevent the housing from being corroded by the electrolyte.

## SUMMARY OF THE DISCLOSURE

The disclosure provides a battery, a battery module, and a battery pack and the invention is given by the claims.

In the first aspect, an embodiment of the disclosure provides a battery. The battery includes a housing, an electrode element accommodated in the housing, a first terminal, a second terminal and a fuse structure. The electrode element includes a first electrode and a second electrode. The first terminal protrudes to an outside of the housing and is electrically connected to the first electrode. The second terminal protrudes to the outside of the housing and is electrically connected to the second electrode. The fuse structure is electrically connected to the first terminal and the housing, and the fuse structure is configured to disconnect an electrical connection between the housing and the first terminal when a current between the housing and the first terminal is greater than a preset fuse point. The fuse structure is located outside an electrical conduction path of the first terminal and the first electrode. The housing comprises a cavity body with an opening, and a cover plate covering the opening of the cavity body. The cavity body is electrically connected to the cover plate. The first terminal is electrically connected to the cavity body through the fuse structure. The fuse structure is located inside the housing. The battery further comprises a current collecting plate located in a receiving space of the cavity body, the current collecting plate is electrically connected to the first terminal and the first electrode, and the current collecting plate is electrically connected to the cover plate or the cavity body through the fuse structure.

The second aspect of the disclosure provides a battery module including at least one battery as described above.

The third aspect, of the disclosure provides a battery pack, which includes at least one battery module as described above.

## BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.

FIG. 1 is a schematic structural diagram of a battery provided in an embodiment of the disclosure.
FIG. 2 is a schematic partial structural diagram of a connection relationship between a first terminal and a first electrode provided in an embodiment of the disclosure.
FIG. 3 is a schematic structural diagram of another battery provided in an embodiment of the disclosure.
FIG. 4 is a schematic structural diagram of yet another battery provided in an embodiment of the disclosure.
FIG. 5 is a schematic partial structural diagram of a position of a first terminal provided in an embodiment of the disclosure.
FIG. 6 is a schematic perspective diagram of a fuse structure provided in an embodiment of the disclosure. embodiment of the disclosure.
FIG. 7 is a schematic structural diagram of a fuse structure provided in an embodiment of the disclosure.
FIG. 8 is a schematic structural diagram of another fuse structure provided in an embodiment of the disclosure.
FIG. 9 is a schematic structural diagram of still another fuse structure provided in an embodiment of the disclosure.
FIG. 10 is a schematic structural diagram of yet another fuse structure provided in an embodiment of the disclosure.
FIG. 11 is a schematic perspective diagram of still another fuse structure provided in an embodiment of the disclosure.
FIG. 12 is a schematic structural diagram of a battery module provided in an embodiment of the disclosure.
FIG. 13 is a schematic diagram of a connection relationship of multiple batteries provided in an embodiment of the disclosure.
FIG. 14 is a schematic diagram of insulation failure between adjacent batteries provided in an embodiment of the disclosure.
FIG. 15 is a schematic diagram of insulation failure between two batteries spaced apart provided in the embodiment of the disclosure.
FIG. 16 is a schematic structural diagram of a battery pack provided in an embodiment of the disclosure.

## DESCRIPTION OF EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

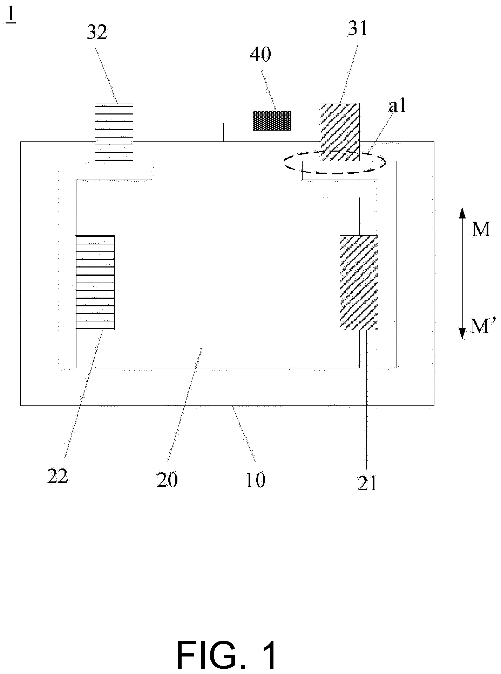

The embodiment of the disclosure provides a battery. The structure shown in FIG. 1 is taken as an example but not limited thereto. The battery may include a housing 10, an electrode element 20, a first terminal 31, a second terminal 32 and a fuse structure 40. The electrode element 20 is accommodated in the housing 10, and the electrode element 20 includes a first electrode 21 and a second electrode 22. The first terminal 31 protrudes to the outside of the housing 10 and is electrically connected to the first electrode 21. The second terminal 32 protrudes to the outside of the housing 10 and is electrically connected to the second electrode 22. The fuse structure 40 is electrically connected to the first terminal 31 and the housing 10, and the fuse structure 40 is configured to disconnect the electrical connection between the housing 10 and the first terminal 31 when the current between the housing 10 and the first terminal 31 is greater than a preset fuse point.

By providing a fuse structure in the battery, the disclosure can control the housing to be insulated from the first terminal when the current between the housing and the first terminal is greater than the preset fuse point, that is, to disconnect the electrical connection between the housing and the first terminal to cut off the conductive path between the first terminal and the housing. In this way, it is possible to avoid damage to the housing due to excessive current, thereby avoiding damage to the battery and improving the safety and stability of the battery.

Moreover, by providing the fuse structure, when the current between the housing and the first terminal is not greater than the preset fuse point, the first terminal and the housing can be electrically connected, so that the housing and the first terminal have the same potential. In this way, electrochemical corrosion of the housing can be avoided, and the stability of the housing can be enhanced.

Optionally, in the embodiment of the disclosure, the fuse structure may be at least one of a wire and a fuse.

Specifically, when the fuse structure is a wire, the wire can be made of but not limited to a metal wire, such as but not limited to aluminum wire, to simplify the difficulty of making the fuse structure.

Further, in the embodiment of the disclosure, when the fuse structure is a wire, the resistance of the wire can satisfy the following relationship expression (hereinafter referred to as relationship expression 1):

$$R = (c \times m \times \Delta T_1 - K \times A \times \Delta T_2)/I^2 \times t$$

Specifically, $R$ is the resistance of the wire, $c$ is the specific heat capacity of the wire, $m$ is the mass of the wire, $\Delta T_1$ is the increase in temperature of the wire; $K$ is the heat transfer coefficient of the wire, $A$ is the heat dissipation area of the wire, and $\Delta T_2$ is the temperature difference between the wire and the heat dissipation environment, $I$ is the current passing through the wire, and $t$ is the fusing time required for the wire.

In addition, for the heat transfer coefficient, the heat transfer coefficient may be a positive value, and the unit may be watts/(m²·°C), that is, W/(m²·°C).

To be precise, optionally, the selection of the length and cross-sectional area of the wire (that is, the selection of the resistance $R$) can be made based on the calculation of the current ($I$) to form a short circuit when the insulation of the series battery in the battery module fails as well as the required fusing time ($t$).

Specifically, the fuse structure is disconnected when the temperature rises $\Delta T_1$ and reaches the fuse point. If the fuse structure is a wire, the above relationship expression can be determined according to the following process.

When the heat changes (indicated by $Q$) as the wire heats up $\Delta T_1$, then:

$$Q = c \times m \times \Delta T_1 ;$$

$$Q = Q_1 - Q_2 ;$$

$$Q_1 = I^2 \times R \times t \; ;$$

$$Q_2 = \varphi \times t \; ;$$

$$\varphi = K \times A \times \Delta T_2.$$

Specifically, $Q_1$ represents the heat generated by the wire when it heats up $\Delta T_1$, $Q_2$ represents the heat released by the wire, $I$ represents the current passing through the wire, and $\varphi$ represents the heat dissipation power.

Through the modification of the above expression, the relational expression 1 can be determined, and the relation between the resistance of the wire and other parameters can be determined, so that when the wire is adopted as the fuse structure, the performance parameters of the fuse structure can be controlled, so as to meet the needs of various application scenarios and improve design flexibility.

Certainly, in specific implementation, the fuse point can be set to 500A, but not limited thereto, or set to other values according to the actual situation, as long as the safety of the battery and even the battery module can be improved through the fuse structure. The disclosure provides no limitation to the specific setting of the fuse point.

Similarly, the fusing time of the fuse structure can be set between 0.01s and 10s, but not limited thereto, or set to other values according to the actual situation, as long as the safety of the battery and even the battery module can be improved through the fuse structure. The disclosure provides no limitation to the specific setting of the fuse point.

In addition, optionally, in the embodiment of the disclosure, the fuse structure may also be a fuse.

That is to say, in the specific implementation, the simplest wire, or an electrical safety device (such as fuse structure, a ready-made fuse or thermal cut-off, and so on) can be adopted to realize the fuse structure to meet the needs of different application scenarios and improve the flexibility of the design.

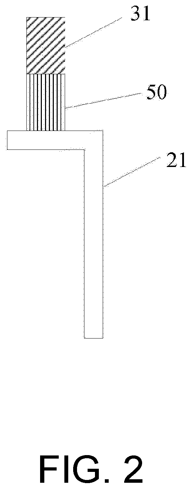

Optionally, in the embodiment of the disclosure, the first terminal 31 is electrically connected to the first electrode 21 through the connecting member 50, as shown in the partial schematic diagram of FIG. 2, and the connecting member 50 is made of the same material as the fuse structure.

Alternatively, the first terminal 31 is directly electrically connected to the first electrode 21, as shown in the dashed circle a1 in FIG. 1.

In other words, for the first terminal and the first electrode, the connection relationship between the two can be set in two manners. One of the connection relationship between the two is that the first terminal and the first electrode are directly connected, and there is no structure such as a connector between the two. Another connection relationship between the two is an indirect connection between the first terminal and the first electrode, that is, a connecting member is provided between the two, and the first terminal and the first electrode are connected through the connecting member.

Certainly, in actual situations, one connection configuration can be selected from the above two configuration methods according to actual needs and structural design of the battery, etc., to meet the needs of different application scenarios and improve design flexibility.

In addition, the connecting member can be made of the same material as the fuse structure, and can be made of other manufacturing materials as well, as long as the connecting member can realize electrical connection between the first terminal and the first electrode. The disclosure provides no limitation to the specific configuration method of the connecting member.

It should be noted that when the housing and the first terminal is electrically disconnected and insulated from each other, the first electrode is still electrically connected to the first terminal, and the second electrode is still electrically connected to the second terminal. That is, when the fuse structure is disconnected, it has no influence on the status of electrical connection between the first terminal and the first electrode as well as the second terminal and the second electrode. Therefore, even if the fuse structure is disconnected, it can still be ensured that the battery can work normally and effectively, such that the battery can work normally and properly while the safety and stability of the battery can be improved.

Likewise, a connection manner similar to the connection manner of the first terminal and the first electrode can also be adopted for the second terminal and the second electrode. For details, please refer to the above description, which will not be described in detail here.

Optionally, in the embodiment of the disclosure, the manufacturing material of the housing includes conductive materials. When the conductive material is metallic aluminum, the first electrode is positive, and the second electrode is negative. Alternatively, when the conductive material is an iron-based material or a copper-based material, the first electrode is negative, and the second electrode is positive.

The reason for the above configuration is as follows. The negative electrode can generally be made of carbon materials, tin-based materials, lithium-containing transition metal nitrides or alloys and other materials. The positive electrode can generally be made of lithium-containing compounds such as lithium cobaltate, lithium manganate, or lithium iron phosphate and so on. The housing can generally be made of aluminum, iron-based or copper-based materials.

During the production or use of the battery, in some cases such as internal insulation failure may cause the negative or positive electrode to be electrically connected to the housing. If the housing is made of aluminum material and the negative electrode is electrically connected to the housing, and if the potential of the housing made of aluminum material is low, lithium intercalation will occur during the process of charging and discharging or standing still and forms lithium aluminum alloy, which causes the housing made of aluminum material to corrode. In light of the above, under the circumstances, the housing may be set to be electrically connected to the positive electrode, that is, the housing is electrically connected to the positive electrode through the first terminal, so as to prevent the housing made of aluminum material from having a low potential, thereby preventing the housing from corroding and enhancing the reliability of the housing.

If the housing is made of iron-based material or copper-based material and the positive electrode is electrically connected to the housing, and if the housing made of iron-based material or copper-based material is at a high potential, oxidation reaction may occur and cause that the housing made of iron-based material or copper-based material to corrode. In light of the above, under the circumstances, the housing may be set to be electrically connected to the negative electrode, that is, the housing is electrically connected to the negative electrode through the first terminal, so as to prevent the housing made of iron-based material or copper-based material from having a high potential, thereby preventing the housing from corroding and enhancing the reliability of the housing.

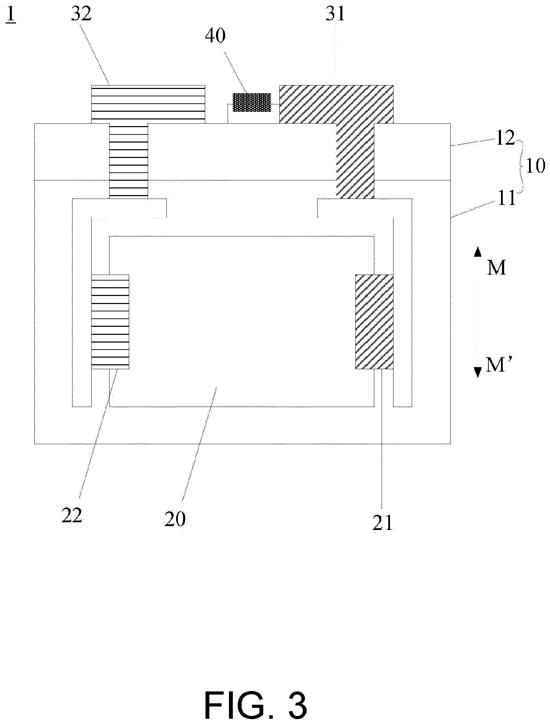

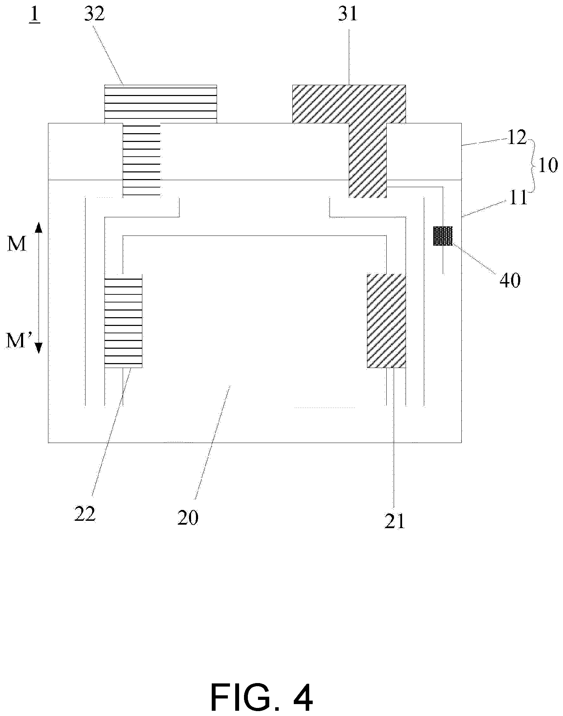

In specific implementation, in the embodiment of the disclosure, as shown in FIG. 3 and FIG. 4, the housing 10 includes a cavity body 11 with an opening, and a cover plate 12 covering the opening of the cavity body 11. The cavity body 11 is electrically connected to the cover plate 12. The first terminal 31 is electrically connected to the cover plate 12 through the fuse structure 40 (as shown in FIG. 3), or the first terminal 31 is electrically connected to the cavity body 11 through the fuse structure 40 (as shown in FIG. 4).

That is to say, when setting the fuse structure, to allow the fuse structure to electrically connect the first terminal and the housing, the fuse structure can be implemented in two manners as follows.

Method 1: The fuse structure electrically connects the first terminal and the cover plate. Specifically, since the cavity is electrically connected to the cover plate, and since the cover plate is part of the housing, the fuse structure can realize electrical connection between the first terminal and the housing.

Method 2: The fuse structure is electrically connected to the first terminal and the cavity. Specifically, likewise, since the cavity is electrically connected to the cover plate, and since the cavity is part of the housing, the fuse structure can realize electrical connection between the first terminal and the housing.

In actual situations, the above method 1 and method 2 can be selected according to actual needs, battery design mode, etc., to meet the needs of different application scenarios and improve design flexibility.

Optionally, in the embodiment of the disclosure, both the cavity and the cover can be made of conductive materials. Under the circumstances, insulating films can be provided on the outer surface of the cavity and the surface on one side of the cover plate facing away from the cavity. Specifically, the insulating film can be made of inorganic materials or organic materials with insulating properties, as long as the insulating properties can be achieved, and the disclosure provides no limitation to the specific production materials. In this way, insulation between two adjacent batteries can be achieved, and short circuits between adjacent batteries can be avoided, thereby facilitating assembly of multiple batteries.

Specifically, in the embodiment of the disclosure, the position of the fuse structure may be set as described in the conditions below.

Condition 1: Optionally, in the embodiment of the disclosure, as shown in FIG. 3, the fuse structure 40 is located outside the housing 10. The first terminal 31 and the cover plate 12 are respectively welded to the fuse structure 40. In other words, the fuse structure is directly arranged between the cover plate and the first terminal, so as to directly realize the electrical connection between the cover plate and the first terminal. Since the fuse structure is set outside the housing, the setting of the fuse structure has no influence on the internal structure and design of the housing. It can be ensured that the original structure inside the housing remains unchanged, only that the fuse structure is added outside the housing. In this way, the design can greatly simplify the complexity of setting the fuse structure, and the implementation process is simple and easy to operate.

In addition, because the fuse structure is arranged outside the housing, the battery module can be repaired and replaced more simply, quickly and effectively when the battery module is repaired in the future, which improves the after-sales maintenance efficiency of the battery module and even the battery pack.

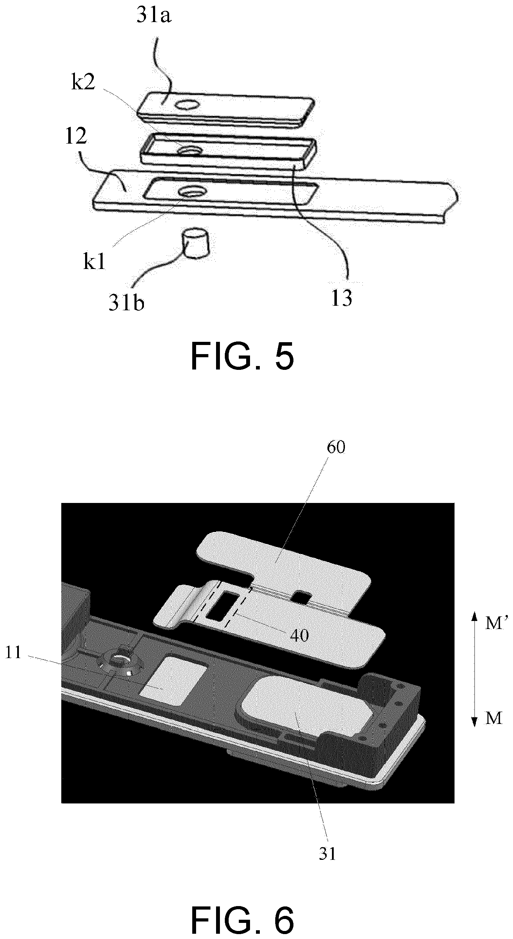

Specifically, in the embodiment of the disclosure, as the partial structural diagram corresponding to the first terminal shown in FIG. 5, the cover plate 12 has a first through hole k1, and the first terminal 31 includes a first pole 31a electrically connected to a rivet 31b, and the housing further includes an insulating block 13 for accommodating the first terminal 31.

In details, the insulating block 13 has a second through hole k2, and the first through hole k1 overlaps the second through hole k2 in a direction perpendicular to the surface of the first terminal 31, so that one end of the rivet 31b can pass through the first through hole k1 and the second through hole k2 in sequence to be electrically connected to the first pole 31a. The other end of the rivet 31b may be directly electrically connected to the first electrode (as shown in FIG. 1) or electrically connected to the first electrode through a connector (as shown in FIG. 2). In this way, the electrical connection between the electrode and the pole can be realized through the rivet, which facilitates the subsequent implementation of the batteries in series or in parallel.

To be precise, optionally, the arrangement of the partial structure corresponding to the first terminal is basically similar to the arrangement of the partial structure corresponding to the second terminal. For the partial structure corresponding to the second terminal, please refer to FIG. 5, which will not be described in detail here.

Condition 2: Optionally, in the embodiment of the disclosure, as shown in FIG. 4, the fuse structure is located inside the housing 10. As shown in the partial schematic diagram of FIG. 6, the battery further includes a current collecting plate 60 located in a receiving space of the cavity body. The current collecting plate 60 is electrically connected to the first terminal 31 and the first electrode, respectively. The current collecting plate 60 is electrically connected to the cover plate or cavity body 11 through the fuse structure 40.

In details, the direction M in FIG. 4 indicates the top direction of the battery, and the terminal protrudes from the top of the battery, and the direction M' indicates the bottom direction of the battery. Viewing from the overall FIG. 6, the current collecting plate 60 is located inside the housing 10. In this way, the fuse structure can be located inside the housing through the current collecting plate arranged inside the housing, so that the fuse structure avoids contact with the air outside the housing, thereby protecting the fuse structure and avoiding the fuse structure from being impacted, so as to improve the safety and stability of the battery.

Specifically, in the embodiment of the disclosure, as shown in FIG. 6, the current collecting plate 60 and the fuse structure 40 are an integrated structure. In this way, the fuse structure can be manufactured when the current collecting plate is formed, which not only simplifies the manufacturing process of the battery and reduces the manufacturing steps of the battery, but also helps simplify the structure of the battery and optimize the structure of the battery.

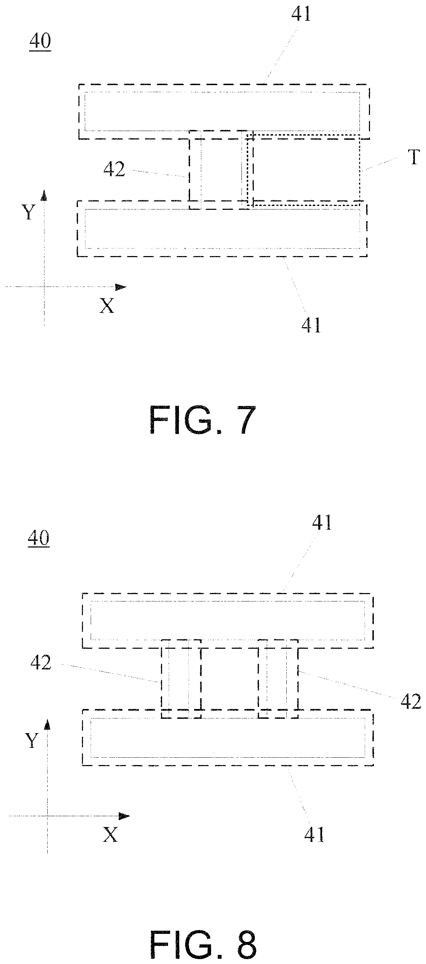

In specific implementation, in the embodiment of the disclosure, as shown in FIG. 7 to FIG. 11, the fuse structure 40 is a conductive structure having through holes or through slots. No matter whether the through hole or the through slot is provided, as long as it can be ensured that the fuse structure disconnects the electrical connection between the housing and the first terminal when the current between the housing and the first terminal is greater than the preset fuse point, the disclosure provides no limitation to the specific configuration of the through hole and the through slot.

Since the fuse structure includes a through hole or a through slot, and is a conductive structure, with the configuration of the through hole or through slot, the surface area of the conductive structure can be reduced, so that the resistance of the conductive structure increases. When a large current passes through the fuse structure, since the resistance is large, more heat can be released. When the current passing through is large enough to cause the conductive structure to fuse, that is, the current passing through the conductive structure is greater than the fuse point of the conductive structure, which causes the conductive structure to fuse, the housing is disconnected from the first terminal, such that insulation is realized, thus protecting the housing from damage and preventing occurrence of worse situation, thereby improving the safety and stability of the battery.

Specifically, in an embodiment of the disclosure, the fuse structure includes: two first divisions extending in a first direction and arranged in parallel, and at least one second division extending in a second direction. One of the first divisions is electrically connected with the first terminal, and the other one of the first divisions is electrically connected with the housing; the second division is electrically connected between the two first divisions; and the first direction intersects the second direction.

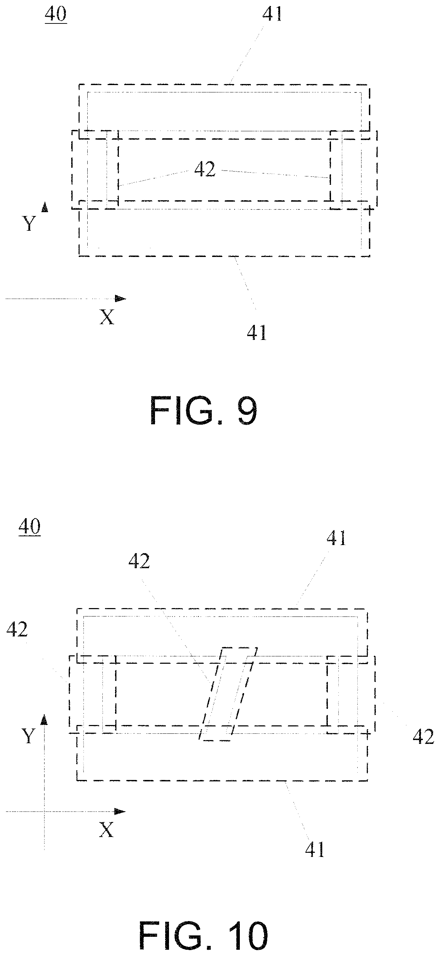

For example, as shown in FIG. 7, the two first divisions 41 extend along the direction X (that is, the first direction), the second division 42 extends along the direction Y (that is, the second direction), and there is one second division 42. As shown in FIG. 8 and FIG. 9, the two first divisions 41 extend along the direction X, the second division 42 extends along the direction Y, and there are two second divisions 42. As shown in FIG. 10, two first divisions 41 extend along the direction X, the second division 42 extends along the direction Y, and there are three second divisions 42.

In this way, current can flow from one of the first divisions to the other first division through the second division, such that the current can reach the housing from the first terminal, thus forming the conductive path.

Certainly, the position and number of the second division are not limited to those shown in FIG. 7 to FIG. 11, and can be set as needed as long as the current can be transmitted through the second division to form the conductive path. The disclosure provides no limitation thereto.

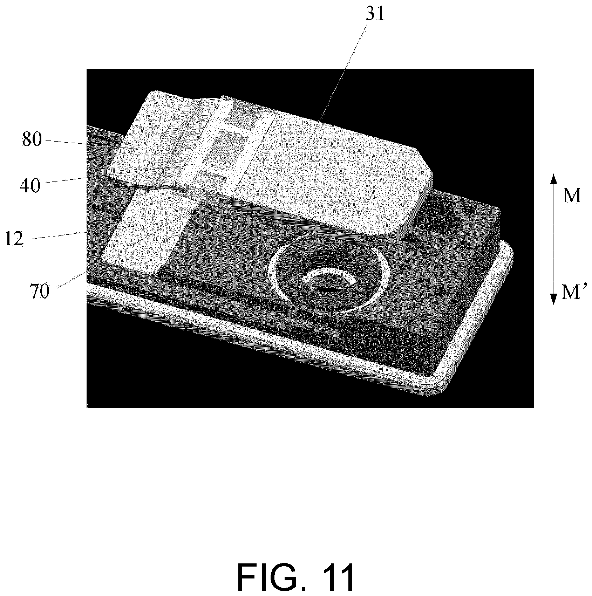

It should be noted that, optionally, as shown in FIG. 11, when the fuse structure 40 is arranged outside the housing, one end of the fuse structure 40 is connected to the first terminal 31, and the other end of the fuse structure 40 is electrically connected to the cover plate 12 through the second connecting member 80 (as opposed to the connecting member referred to as the first connecting member arranged between the first terminal and the first electrode). Under the circumstances, the fuse structure 40 can be connected between the second connecting member 80 and the first terminal 31 through welding to optimize the overall structure of the battery.

Specifically, the direction M in FIG. 3 indicates the top direction of the battery, and the terminal protrudes from the top of the battery, and the direction M' indicates the bottom direction of the battery. Viewing from the overall FIG. 11, it can indicate that the fuse structure 40 is located outside the housing 10.

Optionally, in the embodiment of the disclosure, the fuse structure is a conductive structure or a wire. The battery further includes an insulating structure that wraps the fuse structure. For example, as shown in FIG. 11, taking the fuse structure having a through hole and serving as a conductive structure as an example, the insulating structure 70 wraps the fuse structure 40.

Since the fuse structure is a conductive structure or a wire, the material adopted for forming the fuse structure can be selected from conductive metal, conductive metal oxide, or other conductive inorganic materials. The property of conductive materials causes the conductive materials to be more likely to be oxidized or corroded, resulting in a decrease in the conductivity of the fuse structure, which reduces the chemical corrosion resistance performance of the housing.

Moreover, for conductive materials, especially some conductive metals which normally have higher thermal conductivity, if the battery is in an environment with high temperature, the bare fuse structure (that is, the fuse structure that is not protected by an insulating structure) is affected by the temperature of surrounding environment, and thus is more likely to be fused, which leads to the decrease in chemical corrosion resistance performance of the housing.

Therefore, by wrapping the insulation structure on the surface of the fuse structure, the insulation structure can protect the fuse structure from corrosion and oxidation whiling preventing the fuse structure from being affected by the surrounding environment, thus providing better protection and heat insulation function for the fuse structure, so as to ensure good electrical conductivity of the fuse structure and ensure that the housing has good chemical corrosion resistance performance.

Optionally, in the embodiment of the disclosure, in addition to the first electrode and the second electrode, the electrode element may also include an electrolyte, a diaphragm, and other structures, and the first electrode and the second electrode can be separated through the diaphragm, thereby preventing the contact between the first electrode and the second electrode. Ion transmission can be achieved through the electrolyte, so that ions can be transmitted between the first electrode and the second electrode.

Specifically, the specific arrangement of each structure in the electrode element can be set according to actual needs. For details, please refer to the related art, and no further description is narrated herein.

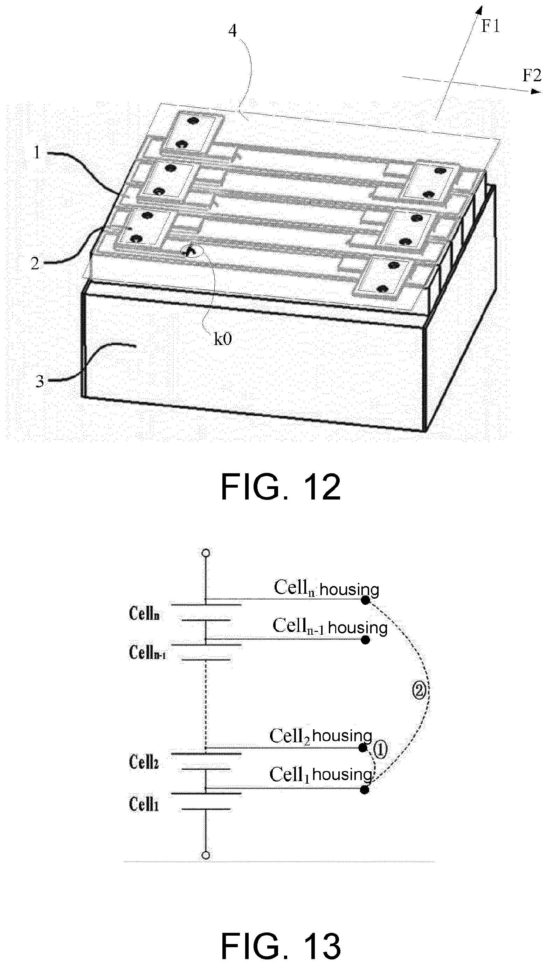

Based on the same concept for the disclosure, an embodiment of the disclosure provides a battery module, as shown in FIG. 12, which may include: at least one battery 1 as provided in the embodiment of the disclosure.

Optionally, in an embodiment of the disclosure, as shown in FIG. 12, the figure shows five batteries, but in actual situations, the number of batteries included in the battery module is not limited to five. The figure herein only serves as an example.

Optionally, in an embodiment of the disclosure, as shown in FIG. 12, in addition to the battery, the battery module further includes an outer frame 3 for loading the battery 1, a busbar 2 configured to realize the series-parallel connection relationship between the batteries 1, and a wire bundling plate 4 for fixing the busbar 2. Specifically, the wire bundling plate 4 may be provided with a through hole k0, and the through hole k0 may overlap with the fuse structure in a direction perpendicular to the surface of the cover plate. In this way, the state of the fuse structure can be easily observed through the through hole k0, and the state of the battery can be determined intuitively, which provides a reference for the safe use of the battery.

To be precise, optionally, on the wire bundling plate, a through hole k0 may be provided corresponding to the setting position of each fuse structure, that is, the through hole and the fuse structure are arranged in a one-to-one configuration. Although only one through hole is shown in FIG. 12, it does not mean that only this one through hole is provided in the specific implementation. Here, this one through hole is only used as an example for description.

Specifically, as shown in FIG. 12, the batteries 1 are arranged in a row along the first direction F1. In details, the arrangement direction of the first electrode and the second electrode is the second direction F2, and the first direction F1 is perpendicular to the second direction F2 and parallel to the surface of the cover plate. In this way, the design helps to realize the assembly and series-parallel arrangement of multiple batteries, and increase the output capacity of the battery module.

Specifically, in actual situations, when the battery module confronts squeezing, impact, foreign object intrusion or other abnormal conditions, damage is likely to be caused to the insulation film of the battery adjacent to another battery and arranged in series configuration in the battery module, or other situation may be caused and result in insulation failure, which then causes short circuit in the battery module. Under the circumstances, the short circuit can be disconnected by the fusing of the fuse structure, thereby avoiding safety risks such as ignition or thermal runaway of the battery module.

In details, the short circuit that occurs can involve the following situations.

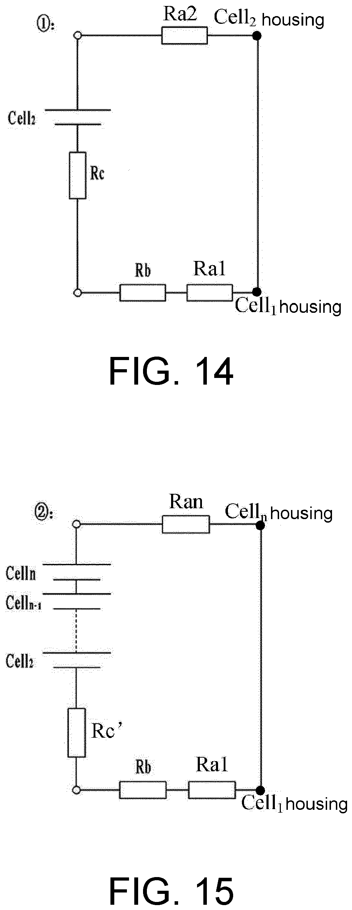

Condition 1: Please refer to FIG. 13 and FIG. 14. FIG. 14 is the short circuit indicated by ① in FIG. 13, which indicates the insulation failure between two adjacent batteries. In FIG. 14, Ra2 represents the resistance of the fuse structure set in a second battery (denoted by Celh), Ra1 represents the resistance of the fuse structure set in a first battery (denoted by Celli), Rb represents the resistance of the busbar used to realize the electrical connection between the first battery and the second battery, and Rc represents the internal resistance of the second battery.

Condition 2: Please refer to FIG. 13 and FIG. 15. FIG. 15 is the short circuit shown by (2) in FIG. 13, which represents the insulation failure between n number of adjacent batteries (n is the number of frames greater than 2). In FIG. 15, Ran represents the resistance of the fuse structure set in the battery n (denoted by $Cell_n$), Ra1 represents the resistance of the fuse structure set in the first battery (denoted by Celli), Rb represents the resistance of the busbar used to realize the electrical connection between the first battery and the second battery, and Rc' represents the sum of the internal resistance of n-1 number of batteries and the resistance of the busbar used to realize the electrical connection between the second battery and the battery n.

In the actual condition, no matter which of the above situations occurs, by providing a fuse structure in the battery, and when the current between the housing and the first terminal is greater than the preset fuse point, it is possible to control the housing to be insulated from the first terminal, that is, to disconnect the electrical connection between the housing and the first terminal, thus cutting off the conductive path between the first terminal and the housing. In this way, it is possible to avoid damage to the housing due to excessive current, thereby avoiding damage to the battery and improving safety and stability of the battery.

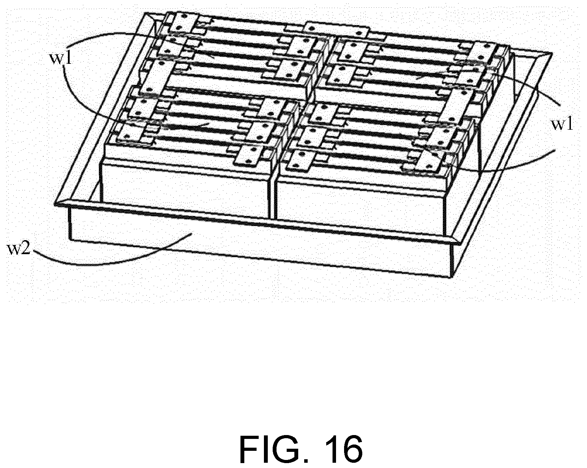

Based on the same concept of the disclosure, an embodiment of the disclosure provides a battery pack, as shown in FIG. 16, including: at least one battery module w1 as described above and provided in the embodiment of the disclosure. Specifically, FIG. 16 shows four battery modules w1, but in actual situations, the number of battery modules w1 included in the battery pack is not limited to four, and other numbers are also possible, depending on the size of the battery pack. The disclosure provides no limitation thereto.

Optionally, in the embodiment of the disclosure, as shown in FIG. 16, the battery pack may further include a tray w2 for accommodating the battery module w1.

Certainly, in actual situations, in addition to the battery module and the tray, the battery pack also includes other structures for assembling the battery pack. For details, please refer to the related art, and no further description is narrated herein.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery (1), comprising:

a housing (10);
an electrode element (20), accommodated in the housing (10) and including a first electrode (21) and a second electrode (22);
a first terminal (31) protruding to an outside of the housing (10) and electrically connected to the first electrode (21);
a second terminal (32) protruding to the outside of the housing (10) and electrically connected to the second electrode (22); and
a fuse structure (40), electrically connected to the first terminal (31) and the housing (10), wherein when a current between the housing (10) and the first terminal (31) is greater than a preset fuse point, the fuse structure (40) is cut-off, and an electrical connection between the housing (10) and the first terminal (31) is disconnected; and
the fuse structure (40) is located outside an electrical conduction path of the first terminal (31) and the first electrode (21),
wherein the housing (10) comprises a cavity body (11) with an opening, and a cover plate (12) covering the opening of the cavity body (11);
the cavity body (11) is electrically connected to the cover plate (12); the first terminal (31) is electrically connected to the cavity body (11) through the fuse structure (40),
wherein the fuse structure (40) is located inside the cavity body (11) of the housing (10); the battery (1) further comprises a current collecting plate (60) located in a receiving space of the cavity body (11), the current collecting plate (60) is electrically connected to the first terminal (31) and the first electrode (21), and the current collecting plate (60) is electrically connected to the cover plate (12) or the cavity body (11) through the fuse structure (40).

2. The battery (1) according to claim 1, wherein the housing (10) is made of aluminum, an iron-based material or a copper-based material;

when the housing (10) is made of aluminum, the first electrode (21) is positive, and the second electrode (22) is negative; or
when the housing (10) is made of the iron-based material or the copper-based material, the first electrode (21) is negative, and the second electrode (22) is positive.

3. The battery (1) according to claim 1, wherein the fuse structure (40) is at least one of a wire and a thermal cut-off.

4. The battery (1) according to claim 1, wherein the current collecting plate (60) and the fuse structure (40) are an integral structure.

5. The battery (1) according to any one of claims 1, 2, 4, wherein the fuse structure (40) is a conductive structure having through holes or through slots.

6. The battery (1) according to claim 5, wherein the fuse structure (40) comprises two first divisions (41) extending in a first direction (X) and arranged in parallel, and at least one second division (42) extending in a second direction (Y);
one of the first divisions (41) is electrically connected to the first terminal (31), and the other one of the first divisions (41) is electrically connected to the housing (10); the second division (42) is electrically connected between the two first divisions (41); and the first direction (X) intersects the second direction (Y).

7. The battery (1) according to claim 1 or 6, further comprising an insulating structure (70) wrapping the fuse structure (40).

8. A battery module, comprising: at least one battery (1) as claimed in any one of claims 1-7, an outer frame (3) for loading the battery (1), a busbar (2) for electrical connection of the battery (1), and a wire bundling plate (4) for fixing the busbar (2).

9. A battery pack, comprising: at least one battery module as claimed in claim 8.

**Patentansprüche**

1. Batterie (1), umfassend:

ein Gehäuse (10);
ein Elektrodenelement (20), das in dem Gehäuse (10) untergebracht ist und eine erste Elektrode (21) und eine zweite Elektrode (22) enthält;

einen ersten Anschluss (31), der zu einer Außenseite des Gehäuses (10) vorsteht und elektrisch mit der ersten Elektrode (21) verbunden ist;
einen zweiten Anschluss (32), der zu der Außenseite des Gehäuses (10) vorsteht und elektrisch mit der zweiten Elektrode (22) verbunden ist; und
eine Sicherungsstruktur (40), die elektrisch mit dem ersten Anschluss (31) und dem Gehäuse (10) verbunden ist,
wobei, wenn ein Strom zwischen dem Gehäuse (10) und dem ersten Anschluss (31) größer ist als ein voreingestellter Sicherungspunkt, die Sicherungsstruktur (40) abgeschaltet wird und eine elektrische Verbindung zwischen dem Gehäuse (10) und dem ersten Anschluss (31) unterbrochen wird; und

die Sicherungsstruktur (40) sich außerhalb eines elektrischen Leitungspfades des ersten Anschlusses (31) und der ersten Elektrode (21) befindet,
wobei das Gehäuse (10) einen Hohlraumkörper (11) mit einer Öffnung und eine Abdeckplatte (12) umfasst, die die Öffnung des Hohlraumkörpers (11) abdeckt; der Hohlraumkörper (11) elektrisch mit der Abdeckplatte (12) verbunden ist; der erste Anschluss (31) elektrisch mit dem Hohlraumkörper (11) durch die Sicherungsstruktur (40) verbunden ist,
wobei sich die Sicherungsstruktur (40) innerhalb des Hohlraumkörpers (11) des Gehäuses (10) befindet; die Batterie (1) ferner eine Stromsammelplatte (60) umfasst, die sich in einem Aufnahmeraum des Hohlraumkörpers (11) befindet, die Stromsammelplatte (60) elektrisch mit dem ersten Anschluss (31) und der ersten Elektrode (21) verbunden ist, und die Stromsammelplatte (60) elektrisch mit der Abdeckplatte (12) oder dem Hohlraumkörper (11) über die Sicherungsstruktur (40) verbunden ist.

2. Batterie (1) gemäß Anspruch 1, wobei das Gehäuse (10) aus Aluminium, einem Material auf Eisenbasis oder einem Material auf Kupferbasis hergestellt ist;

wenn das Gehäuse (10) aus Aluminium hergestellt ist, die erste Elektrode (21) positiv ist und die zweite Elektrode (22) negativ ist; oder
wenn das Gehäuse (10) aus dem Material auf Eisenbasis oder dem Material auf Kupferbasis hergestellt ist, die erste Elektrode (21) negativ ist und die zweite Elektrode (22) positiv ist.

3. Batterie (1) gemäß Anspruch 1, wobei die Sicherungsstruktur (40) wenigstens eine von einem Draht und einer Thermosicherung ist.

4. Batterie (1) gemäß Anspruch 1, wobei die Stromsammelplatte (60) und die Sicherungsstruktur (40) eine integrale Struktur sind.

5. Batterie (1) gemäß einem der Ansprüche 1, 2, 4, wobei die Sicherungsstruktur (40) eine leitende Struktur ist, aufweisend Durchgangslöcher oder Durchgangsschlitze.

6. Batterie (1) gemäß Anspruch 5, wobei die Sicherungsstruktur (40) zwei erste Unterteilungen (41), die sich in einer ersten Richtung (X) erstrecken und parallel angeordnet sind, und wenigstens eine zweite Unterteilung (42) umfasst, die sich in einer zweiten Richtung (Y) erstreckt;
eine der ersten Unterteilungen (41) elektrisch mit dem ersten Anschluss (31) verbunden ist und die andere der ersten Unterteilungen (41) elektrisch mit dem Gehäuse (10) verbunden ist; die zweite Unterteilung (42) elektrisch zwischen den zwei ersten Unterteilungen (41) verbunden ist; und die erste Richtung (X) die zweite Richtung (Y) schneidet.

7. Batterie (1) gemäß Anspruch 1 oder 6, die ferner eine isolierende Struktur (70) umfasst, die die Sicherungsstruktur (40) umhüllt.

8. Batteriemodul, umfassend: wenigstens eine Batterie (1) gemäß einem der Ansprüche 1 bis 7, einen Außenrahmen (3) zum Laden der Batterie (1), eine Stromschiene (2) zur elektrischen Verbindung der Batterie (1) und eine Drahtbündelplatte (4) zur Befestigung der Stromschiene (2).

9. Batteriepack, umfassend: wenigstens ein Batteriemodul gemäß Anspruch 8.

## Revendications

1. Batterie (1), comprenant :

   un boîtier (10) ;
   un élément d'électrode (20), logé dans le boîtier (10) et comprenant une première électrode (21) et une seconde électrode (22) ;
   une première borne (31) faisant saillie à l'extérieur du boîtier (10) et connectée électriquement à la première électrode (21) ;
   une seconde borne (32) faisant saillie à l'extérieur du boîtier (10) et connectée électriquement à la seconde électrode (22) ; et
   une structure de fusible (40), connectée électriquement à la première borne (31) et au boîtier (10),
   dans laquelle, lorsqu'un courant entre le boîtier (10) et la première borne (31) est supérieur à un point de fusion prédéfini, la structure de fusible (40) est coupée et une connexion électrique entre le boîtier (10) et la première borne (31) est déconnectée ; et
   la structure de fusible (40) est située en dehors d'un chemin de conduction électrique de la première borne (31) et de la première électrode (21),
   dans lequel le boîtier (10) comprend un corps de cavité (11) avec une ouverture, et une plaque de couverture (12) couvrant l'ouverture du corps de cavité (11) ; le corps de cavité (11) est électriquement connecté à la plaque de couverture (12) ; la première borne (31) est électriquement connectée au corps de cavité (11) par l'intermédiaire de la structure de fusible (40),
   dans laquelle la structure de fusible (40) est située à l'intérieur du corps de cavité (11) du boîtier (10) ;
   la batterie (1) comprend en outre une plaque de collecte de courant (60) située dans un espace de réception du corps de la cavité (11), la plaque de collecte de courant (60) est connectée électriquement à la première borne (31) et à la première électrode (21), et la plaque de collecte de courant (60) est connectée électriquement à la plaque de couverture (12) ou au corps de la cavité (11) par l'intermédiaire de la structure de fusible (40).

2. Batterie (1) selon la revendication 1, dans laquelle le boîtier (10) est en aluminium, en matériau à base de fer ou en matériau à base de cuivre ;

   lorsque le boîtier (10) est en aluminium, la première électrode (21) est positive et la seconde électrode (22) est négative ; ou
   lorsque le boîtier (10) est en matériau à base de fer ou en matériau à base de cuivre, la première électrode (21) est négative et la seconde électrode (22) est positive.

3. Batterie (1) selon la revendication 1, dans laquelle la structure de fusible (40) est au moins l'une parmi un fil et une coupure thermique.

4. Batterie (1) selon la revendication 1, dans laquelle la plaque de collecte de courant (60) et la structure de fusible (40) sont une structure intégrale.

5. Batterie (1) selon l'une quelconque des revendications 1, 2, et 4, dans laquelle la structure de fusible (40) est une structure conductrice comportant des trous traversants ou des fentes traversantes.

6. Batterie (1) selon la revendication 5, dans laquelle la structure fusible (40) comprend deux premières divisions (41) s'étendant dans une première direction (X) et disposées en parallèle, et au moins une seconde division (42) s'étendant dans une seconde direction (Y) ;
   l'une des premières divisions (41) est connectée électriquement à la première borne (31), et l'autre des premières divisions (41) est connectée électriquement au boîtier (10) ; la seconde division (42) est connectée électriquement entre les deux premières divisions (41) ; et la première direction (X) coupe la seconde direction (Y).

7. Batterie (1) selon la revendication 1 ou la revendication 6, comprenant en outre une structure isolante (70) enveloppant la structure de fusible (40).

8. Module de batterie, comprenant : au moins une batterie (1) selon l'une quelconque des revendications 1 à 7, un cadre extérieur (3) pour le chargement de la batterie (1), un jeu de barres (2) pour la connexion électrique de la batterie (1), et une plaque de faisceau de fils (4) pour la fixation du jeu de barres (2).

9. Ensemble de batteries comprenant : au moins un module de batterie selon la revendication 8.

FIG. 1

FIG. 2

FIG. 3

FIG. 4

31a

k2

12

k1

31b

13

# FIG. 5

60

11

40

M'

M

31

# FIG. 6

FIG. 7

FIG. 8

FIG. 9

FIG. 10

FIG. 11

## FIG. 12

## FIG. 13

①:

Ra2   Cell₂ housing

Cell₂

Rc

Rb   Ra1

Cell₁ housing

# FIG. 14

②:

Ran   Cellₙ housing

Celln

Celln-1

Cell₂

Rc'

Rb   Ra1

Cell₁ housing

# FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017250394 A1
- EP 2793295 A2
- EP 2495785 A1
- EP 2551938 A1
- CN 108123179 B
- EP 3477743 A1
- CN 201994346 U
- US 2012094172 A1